(19) Europäisches Patentamt
European Patent Office
Office européen des brevets

(11) **EP 3 716 160 B1**

(12) **EUROPEAN PATENT SPECIFICATION**

(45) Date of publication and mention
of the grant of the patent:
**31.07.2024   Bulletin 2024/31**

(21) Application number: **19165126.4**

(22) Date of filing: **26.03.2019**

(51) International Patent Classification (IPC):
**G06N 7/01** *(2023.01)*      **G06N 20/10** *(2019.01)*
**G06F 17/16** *(2006.01)*

(52) Cooperative Patent Classification (CPC):
**G06F 17/16; G06N 7/01; G06N 20/10**

(54) **LEARNING PARAMETERS OF A PROBABILISTIC MODEL COMPRISING GAUSSIAN PROCESSES**

LERNPARAMETER EINES PROBABILISTISCHEN MODELLS MIT GAUSSSCHEN PROZESSEN

PARAMÈTRES D'APPRENTISSAGE D'UN MODÈLE PROBABILISTE COMPRENANT DES PROCESSUS GAUSSIENS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.09.2020   Bulletin 2020/40**

(73) Proprietor: **Robert Bosch GmbH**
**70442 Stuttgart (DE)**

(72) Inventors:
• **Kandemir, Melih**
**70439 Stuttgart (DE)**
• **Xu, Buote**
**71034 Boeblingen (DE)**
• **Reeb, David**
**71272 Renningen (DE)**
• **Rakitsch, Barbara**
**70193 Stuttgart (DE)**

(56) References cited:
• **YOUNG-JIN PARK ET AL: "Deep Gaussian Process-Based Bayesian Inference for Contaminant Source Localization", IEEE ACCESS, vol. 6, 1 January 2018 (2018-01-01), pages 49432 - 49449, XP055624817, DOI: 10.1109/ACCESS.2018.2867687**
• **H. SALIMBENI; M. DEISENROTH: "Doubly Stochastic Variational Inference for Deep Gaussian Processes", ADVANCES IN NEURAL INFORMATION PROCESSING SYSTEMS, 2017, XP081403789**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**FIELD OF THE INVENTION**

The invention relates to a system for learning a set of parameters of a probabilistic model comprising Gaussian processes, e.g., of a technical system with a complicated underlying physical model, and a system for applying the probabilistic model to an input. The invention further relates to computer-implemented methods and computer-readable media corresponding to the systems, and to a computer-readable medium comprising the set of parameters.

**BACKGROUND OF THE INVENTION**

Many technical systems have an underlying physical model that is too complicated to be modelled explicitly. For example, a model predicting an emission value of a particular engine may depend in a complex, non-linear way on its input parameters, such as speed and load or directly on the input parameters of the engine control unit (ECU). In order to model the complex non-linear dependencies arising in such physical models, Gaussian processes (GPs) can be used as a building block in probabilistic modelling. Importantly for safety-critical applications, Gaussian processes can be used not just to predict a point estimate but also to provide an associated uncertainty estimate. Models composed of a single GP are known to be well calibrated, e.g., their uncertainty estimates are sound. More complex systems can be modelled using so-called deep Gaussian processes that comprise a hierarchical composition of GPs.

In the paper "Doubly Stochastic Variational Inference for Deep Gaussian Processes" by H. Salimbeni and M. Deisenroth, Advances in Neural Information Processing Systems, 2017 an algorithm for training deep GPs based on doubly stochastic variational inference is presented. The statistics of each GP are learned independently using an inducing point framework based on the mean-field assumption, i.e., the assumption that the latent processes are independent a posteriori.

YOUNG-JIN PARK ET AL: "Deep Gaussian Process-Based Bayesian Inference for Contaminant Source Localization", IEEE ACCESS, vol. 6, 1 January 2018 (2018-01-01), pages 49432-49449, proposes a Bayesian framework for localization of multiple sources in the event of accidental hazardous contaminant release. The framework assimilates sensor measurements of the contaminant concentration with an integrated multizone computational fluid dynamics (multizone-CFD) based contaminant fate and transport model. To ensure online tractability, the framework uses deep Gaussian process (DGP) based emulator of the multizone-CFD model. To effectively represent the transient response of the multizone-CFD model, the DGP emulator is reformulated using a matrix-variate Gaussian process prior. The resultant deep matrix-variate Gaussian process emulator (DMGPE) is used to define the likelihood of the Bayesian framework, while Markov Chain Monte Carlo approach is used to sample from the posterior distribution.

**SUMMARY OF THE INVENTION**

The inventors realized that existing techniques for training and using probabilistic models with Gaussian processes have several shortcomings. First of all, existing techniques for dealing with such probabilistic models are computationally expensive. For example, a relatively large number of parameters is needed to represent the Gaussian processes, meaning that a large number of iterations are needed to train such models using iterative techniques, and that evaluating the model, e.g., computing a lower bound to its marginal likelihood and predictive distribution, is expensive. At the same time, as the inventors realized, assuming independence a-posteriori means neglecting correlations between latent Gaussian processes. This is detrimental to prediction uncertainties as it leads in many cases to underestimation of the uncertainties of the latent posterior and the predictive distribution. This is problematic especially for safety-critical applications.

There is a need to improve probabilistic models based on Gaussian processes in order to address these and other issues.

In accordance with a first aspect of the invention, there is provided a system as defined by the appended claim 1. accordance with a further aspect of the invention, there is provided a method as defined by the appended claim 4. In accordance with further aspects of the invention, computer-readable media are provided as defined by the appended claim 14.

By means of these measures, the inventors were able to develop a family of probabilistic models with various advantages.

Using multiple Gaussian processes allows to provide relatively accurate models for various types of functions, e.g., systems with complex non-linear dependencies such as technical systems or models of physical phenomena. By using a Kronecker product to define the covariance matrix of the multivariate normal probability distribution for a set of Gaussian processes, correlations between the Gaussian processes can be captured in the model, in particular by the first matrix of the Kronecker product. Thereby, various multi-dimensional functions may be modelled more accurately and in particular, uncertainties due to correlations that arise a-posteriori between the Gaussian processes can be taken into account. Indeed, the inventors have found that assuming independence between latent processes a-posteriori can lead to underestimated predictive uncertainties, especially if some latent processes perform interpolation while other latent processes perform extrapolation. Use of the Kronecker product in the approximate posterior allows to model dependencies between the Gaussian processes and helps to reduce inaccuracies occurring if independence were assumed.

Moreover, the various measures allow for more efficient learning of the set of parameters of the probabilistic model and/or application of the probabilistic model to an input. Because of the Kronecker structure, a relatively rich model is obtained with relatively few parameters. Surprisingly, the number of parameters is decreased not just when compared to a model that would have a full covariance matrix of a multivariate normal distribution, but even when compared to models that have independent covariance matrices for respective Gaussian processes that are not defined by a common Kronecker structure.

By using less parameters than for independent covariance matrices or one full covariance matrix, improved efficiency in terms of storage and reduced risk of overfitting is achieved. Also, the Kronecker structure results in more efficient optimization, Firstly, this is because a smaller number of iterations can suffice to reach convergence to an optimal set of parameters. Secondly, when sampling from the multivariate normal probability distribution and various probability distributions derived from it, its parametrization with a first and second matrix instead of a covariance matrix makes various computations more efficient. For example, it may be more efficient to compute the lower bound of the marginal likelihood and/or to sample from the approximate predictive distributions of the probabilistic model. Since the multivariate normal probability distribution is typically used both for optimizing the set of parameters and for sampling outputs of the probabilistic model, using the Kronecker decomposition of the covariance matrix can improve performance in both cases.

The above aspects of the invention involve a probabilistic model, sometimes also called a Bayesian model. Generally, given an input, evaluating a probabilistic model allows to sample, e.g., sample probabilistically, an output corresponding to the input and/or provide a probability distribution for outputs corresponding to the input. Inputs are typically vectors comprising one or more values. In some embodiments, outputs are values; in other embodiments, outputs comprise multiple values. The probabilistic model typically comprises one or more random variables, e.g., latent variables and/or output variables. A latent variable may be defined by a probability distribution or by a stochastic process. They may be instantiated based on, one or more of a current input, sampled values of other random variables of the probabilistic model, and/or parameters, e.g., hyperparameters, of the probabilistic model. A typical example of a stochastic process is a Gaussian process. Various examples of probabilistic models are provided below.

The probabilistic model is a model for predicting one or more output variables based on one or more input variables. In other words, the probabilistic model may be used as an approximation to a function. The function captures a behaviour of a technical system, e.g., a computer-controlled machine such as a robot, a vehicle, a domestic appliance, a power tool, a manufacturing machine, a personal assistant or an access control system. In an embodiment, the probabilistic model is for predicting one or more physical output quantities based on at least one or more physical input quantities obtained from measurements. The measurements are obtained from sensors, e.g., one or more of an image or video camera, a radar, a LiDAR, or an ultrasonic sensor. The predictions may be used to control the technical system whose performance is measured, for example. Interestingly, a probabilistic model may allow to obtain an approximation of such a function output even when an underlying model, e.g., a physical model of the behaviour of the technical system, is unknown and/or too complex to be explicitly modelled.

In an embodiment, the probabilistic model is for predicting an emission value of an engine based on speed and load or the corresponding ECU parameters. In other embodiments, the probabilistic model may be an inverse dynamics model, e.g., a model to compute a torque from inputs comprising one or more of a position, a velocity, and an acceleration. For example, such an inverse dynamics model may compute the torque of a robot.

The probabilistic model comprises, or is composed of, multiple Gaussian processes. Gaussian processes are known in the art of machine learning as a tool to provide a prediction of an output, typically a real number, for an input, typically a vector comprising multiple values, e.g., real numbers. The prediction can comprise not just a value for the output but also an uncertainty estimate, as discussed in more detail below. Conceptually, a Gaussian process may provide an estimate of the output value for a current input based on known output values for other inputs that are similar to the current input, and/or base its uncertainty estimate on the number of similar other inputs and their similarity. A Gaussian process is typically specified by a prior mean function and a covariance function, also known as a kernel. In an embodiment, the prior mean function is the zero function. In an embodiment, the kernel is non-degenerate. The mean function and/or kernel may be defined by a set of hyperparameters. Gaussian processes may be particularly suitable as building blocks for modelling complex non-linear dependencies, e.g., in models of technical systems or physical phenomena.

The probabilistic model is organized in one or more layers. The number of layers may be at most or at least 2, at most or at least 5, or at most or at least 10, for instance. A layer of the one or more layers comprises multiple Gaussian processes, for example, at most or at least 2, at most or at least 10, or at most or at least 20. In other words, the multiple Gaussian processes have a common, or at least partially overlapping, set of inputs. The inputs can comprise outputs of one or more other Gaussian processes and/or inputs of the probabilistic model, for example. Such models are sometimes called multi-GP models. In some embodiments, the probabilistic model may consist of a single layer comprising the multiple Gaussian processes. Such Gaussian processes may be merged together by a weighted sum; in other words, the probabilistic model may be a sum-of-GP model if the output is one-dimensional or a multi-output Gaussian process if the output is a vector. In other embodiments, the probabilistic model comprises multiple layers. For example, each layer may comprise one or more Gaussian processes, e.g., the probabilistic model may be a so-called deep Gaussian process. Typically, outputs of the probabilistic model are noisy, e.g., noise such as Gaussian noise is added to outputs of Gaussian processes or other random variables to obtain respective outputs of the probabilistic model.

The probabilistic model may also comprise random variables that are not generated by a Gaussian process, at the same layer as the Gaussian processes and/or at other layers. For example, the probabilistic model may comprise random variables providing non-Gaussian noise, e.g., Laplacian noise, exponential noise, etcetera. The probabilistic model may also comprise discrete random variables, e.g., based on a Bernoulli or Poisson distribution. As another example, the probabilistic model may comprise latent variables representing neural network nodes, e.g., a latent variable $Y = h(BX)$ where $h$ is an activation function, $B$ are weights, e.g., with a Gaussian prior, and $X$ are inputs. Various other non-Gaussian processes may also be readily incorporated into probabilistic models. Generally, given an input, a sample of an output corresponding to the input may be obtained by sampling values for the random numbers of the probabilistic model based on their respective inputs, and/or a probability distribution of an output corresponding to the input may be obtained by marginalizing over latent variables of the probabilistic model.

Typically, the structure of the probabilistic model, e.g., the number of layers, the number/type of stochastic processes at each layer, the type of kernel function for a Gaussian process, etc., is predefined. However, one or more of these structural aspects of the probabilistic model may also be determined automatically during training, e.g., using various meta learning techniques known in the art and/or stored as parameters of the probabilistic model for application.

The above aspects of the invention relate to a set of parameters of the probabilistic model. For example, if noise is added to the outputs of the probabilistic model according to a probability distribution, the parameters can comprise one or more noise parameters describing a noise model, e.g., a variance or standard deviation for additive Gaussian noise. The parameters can also comprise various hyperparameters, e.g., hyperparameters of particular probability distributions/stochastic processes of the probabilistic model and/or global hyperparameters, e.g., a learning rate, a number of nodes or layers, etc.

The set of parameters may be learned based on a training dataset, e.g., the learning may be supervised, and used when applying the trained model to a given input. In other words, the set of parameters may be determined by optimizing the set of parameters with respect to the training dataset, e.g., comprising multiple training inputs and corresponding training outputs. Typically, the training inputs are vectors, e.g., real-valued vectors; the training outputs can be numbers, e.g., real-valued, but can be vectors as well. For example, a set of parameters may be selected in training based on an ability to reproduce the training outputs given the training inputs and/or generalize from the training dataset to new test points as well as possible. When applying the model, typically, the training dataset is no longer needed; however, embodiments are possible in which parts of the probabilistic model involve lazy learning wherein at least part of the training dataset is used when applying the model. Various techniques may be used to optimize the set of parameters, e.g., stochastic gradient descent, simulated annealing, or various Monte Carlo-based methods. As is common in machine learning, obtaining an exact optimum is often difficult or impossible, e.g., the optimization may be heuristic and/or the obtained set of parameters obtained may correspond to a local optimum.

In various embodiments, at least some of the values comprised in the training inputs and outputs are obtained as sensor measurements. In use, the model may then be applied to inputs comprising sensor measurements as well.

Specifically, the set of parameters comprises one or more parameters of the multiple Gaussian processes whose outputs are approximated. In various embodiments, the set of parameters comprises a set of multiple inducing locations for the multiple Gaussian processes. In other words, the multiple Gaussian processes have a common set of inducing locations. An inducing location may be a point at which the multiple Gaussian processes may be evaluated, for example, a vector of values equal to the number of inputs of the multiple Gaussian processes, e.g., a number of Gaussian processes at the previous layer in the case of a deep Gaussian process model. Inducing locations are sometimes also called inducing points, locations of inducing points, or pseudo inputs. Conceptually, optimizing the set of parameters may comprise selecting a set of inducing points that allows to best reproduce the training outputs given the training inputs, in other words, selecting a set of inducing points representative of inputs of the Gaussian processes, e.g., training inputs or outputs of previous layers. The inducing points are generally not corresponding to or derived from training inputs, although in some embodiments, inducing points may correspond to or be derived from a subset of the training inputs using techniques known from the art.

Interestingly, the set of parameters may also comprise parameters of a probability distribution approximating outputs of the multiple Gaussian processes at the multiple inducing locations, e.g., the probability distribution may be an approximate posterior distribution over such outputs. The outputs are sometimes called pseudo-outputs. When applying the probabilistic model to an input, the approximate posterior and/or approximated outputs of the multiple Gaussian processes at the inducing locations may be used to determine outputs of the multiple Gaussian processes for the input. The probability distribution for the outputs of the multiple Gaussian processes at the multiple inducing locations may comprise a multivariate normal distribution. In other words, a sample of the multivariate normal distribution may represent outputs of each of the Gaussian processes for each of the inducing locations. Use of a multivariate normal distribution may allow to capture correlations between the multiple Gaussian processes, e.g., it is generally not assumed that the multiple Gaussian processes are independent from each other a-posteriori as would be the case, for instance, when each Gaussian process was modelled by a separate probability distribution. The parameters of the multivariate normal distribution typically parametrize comprise its covariance matrix; the parameters may also parametrize its mean.

A general covariance matrix for the probability distribution of the outputs of the Gaussian process can be relatively large; interestingly, however, the covariance matrix is defined by a Kronecker product of a first matrix indicating a similarity between the multiple Gaussian processes and a second matrix indicating a similarity between the multiple inducing locations. In other words, the set of parameters may comprise the entries of, or otherwise define, the first and/or second matrix, instead of comprising all entries of the covariance matrix directly. Typically, the first matrix and the second matrix are positive-definite real matrices. The first matrix may be square with size equal to the number of Gaussian processes whereas the second matrix may be square with size equal to the number of inducing locations.

Apart from the inducing locations and probability distribution parameters, the set of parameters can also comprise a set of hyperparameters of prior mean functions and/or kernels of the multiple Gaussian processes. Typically, each of the multiple Gaussian processes is defined by the same set of hyperparameters, although this is not strictly necessary. As discussed above, in various embodiments, the probabilistic model comprises multiple sets of Gaussian processes, e.g., the probabilistic model may comprise a first set of multiple Gaussian processes at a first layer and a second set of multiple Gaussian processes at a second layer different from the first layer. Instead or in addition, the probabilistic model may comprise an additional set of multiple Gaussian processes at the first layer. A set of multiple Gaussian processes as discussed here is however comprised in the same layer. Typically, different sets of Gaussian processes are defined by different parameters, e.g., each set of Gaussian processes may have separate kernel hyperparameters, separate sets of inducing locations, and/or separate parameters of the probability distribution approximating their outputs at respective inducing locations, e.g., each set of multiple Gaussian processes may have separate first and second matrices. However, some parameters, specifically kernel hyperparameters, may also be shared. Sharing parameters between multiple sets of Gaussian parameters represents a trade-off between minimizing the number of parameters, which may improve the optimization, e.g., by decreasing the number of iterations needed, and improving the expressiveness of the probabilistic model.

Optionally, optimizing the set of parameters comprises maximizing an evidence lower bound with respect to the training dataset. For example, the evidence lower bound may be optimized by maximizing a likelihood of the observed training outputs under the distribution of outputs of the probabilistic model conditioned on the training inputs. The evidence lower bound may also comprise a regularization term penalizing approximate posteriors over the outputs that are too far from their corresponding priors, e.g., in order to prevent overfitting due to too high model complexity, as further discussed below. The evidence lower bound may be an approximate evidence lower bound, e.g., approximated using Monte Carlo sampling. By maximizing the evidence lower bound, a set of parameters may be obtained that best manages to reproduce and/or generalize from the training dataset, and hence best approximates the function to be modelled.

Optionally, optimizing the set of parameters comprises sampling an output of the probabilistic model given a training input and computing a likelihood of obtaining the training output corresponding to the training input from the sampled output under a noise distribution. For example, the probabilistic model may model noisy outputs, e.g., outputs to which noise is added according to a noise distribution. The likelihood of obtaining the training output from the sampled output may be indicative of the accuracy of the probabilistic model on the training input and can be used, e.g., in computing an evidence lower bound or another objective function to be optimized. By sampling as described above, e.g., using the Kronecker structure for the multiple Gaussian processes of the probabilistic model, this likelihood can be computed relatively efficiently and/or avoiding negligence of correlations between the Gaussian processes.

Optionally, sampling the output of the probabilistic model for the training input comprises determining a sample probability distribution of outputs of the multiple Gaussian processes for the training input by marginalizing out the probability distribution approximating the outputs of the multiple Gaussian processes at the multiple inducing locations from a joint probability distribution, and sampling outputs of the multiple Gaussian processes for the training input according to the sample probability distribution. The sampling is typically performed layer-by-layer, e.g., the sample probability distribution for the outputs of the multiple Gaussian process may be determined based on sampled outputs of a previous layer of the probabilistic model. For example, the joint probability may comprise at least the outputs at the multiple inducing points and an output at the training input. In other words, in order to sample the output, marginalization over the inducing points is performed. For instance, no sampling of outputs for the inducing points is needed, which may improve the efficiency of the sampling process and may lead to a more accurate model since inaccuracies due to sampling the inducing outputs are avoided.

Optionally, maximizing the evidence lower bound comprises performing stochastic gradient descent on an objective function comprising the evidence lower bound. Stochastic gradient descent is known per se in the art of machine learning as a versatile and efficient optimization method. Interestingly, the probabilistic model as defined above is well-amenable to stochastic gradient descent. For example, objective functions arising from the probabilistic model, e.g., the evidence lower bound, typically decompose between training inputs and are differentiable. In an embodiment, learning rates for different parameters from the set of parameters may be adaptively computed to improve learning, e.g., the stochastic gradient descent may comprise adaptive moment estimation. Stochastic gradient descent may be particularly helpful for large datasets; for smaller datasets, non-stochastic optimization methods may also be used.

Optionally, determining the set of parameters comprises optimizing a Kullback-Leibler divergence between the probability distribution approximating the outputs of the multiple Gaussian processes at the multiple inducing locations and a prior probability distribution of the outputs of the multiple Gaussian processes at the multiple inducing locations. For example, the Kullback-Leibler divergence may arise in the computation of an evidence lower bound to be maximized, but can also be used in various other objective functions to be minimized or maximized, for instance. In computing the Kullback-Leibler divergence, effective use can be made of the Kronecker structure of the covariance matrix of the approximate posterior, as described in detail elsewhere; the Kullback-Leibler divergence may be computed without explicitly storing and/or computing the covariance matrix defined by the Kronecker product. Hence, using the Kronecker structure makes the optimization more efficient.

Optionally, the first matrix is a diagonal matrix. By taking non-diagonal elements of the first matrix to be zero, the number of parameters may be further decreased, leading to even more efficient learning and use, and even less storage. Especially in settings where at least approximate independence of the multiple Gaussian processes may be assumed or the interpolation / extrapolation scenario is never entered, this leads to a more resource-efficient but in practice still sufficiently expressive model, e.g., compared to having separate probability distributions with separate covariance matrices for each of the multiple Gaussian processes. On the other hand, in settings where it is needed to capture similarity between different Gaussian processes in the first matrix, the first matrix may have at least one non-zero diagonal element allowing to capture such similarity, leading to a more expressive model.

Optionally, a Gaussian process of the multiple Gaussian processes has a squared exponential kernel. In particular, as discussed elsewhere, each Gaussian process of the multiple Gaussian process may have a squared exponential kernel, e.g., defined by the same set of hyperparameters. The squared exponential kernel has various advantageous properties, e.g., it is a universal kernel, has good derivability properties etc. In an embodiment, the squared exponential kernel has automatic relevance determination. Apart from squared exponential kernels, various other types of non-degenerate kernels may be used, e.g., kernels such that the covariance function has full rank, such as rational quadratic kernels or various types of periodic kernels. Generally, such kernels cannot be written as a finite sum of products of functions of their first and second arguments. As discussed, different sets of multiple Gaussian processes in the probabilistic model may have different kernels. For example, each set of multiple Gaussian processes may have a squared exponential kernel, possibly defined by separate sets of hyperparameters, or some sets of Gaussian processes may have squared exponential kernels while other Gaussian processes have other kernels. In an embodiment, each Gaussian process of the probabilistic model has a non-degenerate kernel.

Optionally, the set of parameters of the probabilistic model comprises one or more kernel hyperparameters, each Gaussian process of the multiple Gaussian processes having a kernel defined by the one or more kernel hyperparameters. In other words, each Gaussian process of the multiple Gaussian processes may be defined by the same set of hyperparameters. Such a common set of hyperparameters may help to ensure accuracy of the Kronecker approximation. Having common hyperparameters may further improve performance by limiting the overall number of parameters and/or reducing computational complexity of the resulting computations.

Optionally, when applying the probabilistic model to an input, multiple samples of the output of the probabilistic model on the input may be determined, from which in turn an uncertainty estimate may be determined. The uncertainty estimate can for example be a statistical parameter such as a variance or a standard deviation, a visual uncertainty estimate such as a histogram of samples, etcetera. As discussed above, since the probabilistic model can capture correlations between the multiple Gaussian process, a particularly accurate uncertainty estimate is obtained; moreover, by obtaining the uncertainty estimate from multiple samples, as also discussed elsewhere, particularly efficient sampling based on the Kronecker structure of the covariance matrix can be exploited to improve efficiency.

**BRIEF DESCRIPTION OF THE DRAWINGS**

These and other aspects of the invention will be apparent from and elucidated further with reference to the embodiments described by way of example in the following description and with reference to the accompanying drawings, in which

Fig. 1 shows a system, which is not covered by the scope of the claims, for learning a set of parameters of a probabilistic model by optimizing the parameters with respect to a training dataset;

Fig. 2 shows a system for applying a probabilistic model to an input;

Fig. 3 shows a detailed example of a probabilistic model comprising one or more layers, a layer comprising multiple Gaussian processes, in this case a deep Gaussian process;

Fig. 4 shows a detailed example of how parameters of a probabilistic model, including inducing locations and a first and second matrix defining a covariance matrix for approximating outputs of Gaussian processes at the inducing locations, may be determined and used to apply the probabilistic model to an input;

Fig. 5 shows a method, which is not covered by the scope of the claims, of learning a set of parameters of a probabilistic model by optimizing the parameters with respect to a training dataset;

Fig. 6 shows a method of applying a probabilistic model to an input;

Fig. 7 shows a computer-readable medium comprising data;

Figs. 8a-8d show performance improvements of the proposed probabilistic models on various benchmark datasets.

It should be noted that the figures are purely diagrammatic and not drawn to scale. In the figures, elements which correspond to elements already described may have the same reference numerals.

## DETAILED DESCRIPTION OF EMBODIMENTS

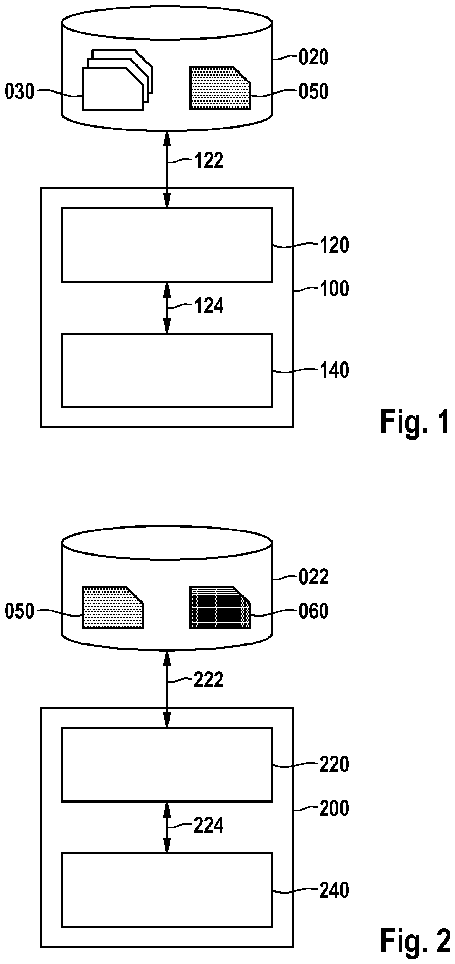

**Fig. 1** shows a system 100 for learning a set of parameters of a probabilistic model, which is not covered by the scope of the claims.

The probabilistic model may comprise one or more layers. A layer of the one or more layers may comprise multiple Gaussian processes. The system 100 may comprise a data interface 120 and a processor subsystem 140 which may internally communicate via data communication 124. The processor subsystem 140 may be configured to, during operation of the system 100 and using the data interface 120, access training dataset 030 comprising multiple training inputs and corresponding training outputs. For example, as shown in Fig. 1, the data interface 120 may provide access 122 to an external data storage 020 which may comprise said data 030. Alternatively, the data 030 may be accessed from an internal data storage which is part of the system 100. Alternatively, the data 030 may be received via a network from another entity. In general, the data interface 120 may take various forms, such as a network interface to a local or wide area network, e.g., the Internet, a storage interface to an internal or external data storage, etc. The data storage 020 may take any known and suitable form.

The processor subsystem 140 may be further arranged to, during operation of the system 100, determine the set of parameters of the probabilistic model 050 by optimizing the set of parameters 050 with respect to the training dataset 030. The set of parameters 050 may comprise a set of multiple inducing locations for the multiple Gaussian processes. The set of parameter 050 may also comprise parameters of a probability distribution approximating outputs of the multiple Gaussian processes at the multiple inducing locations. The probability distribution may comprise a multivariate normal probability distribution. A covariance matrix of the multivariate normal distribution may be defined by a Kronecker product of a first matrix indicating a similarity between the multiple Gaussian processes and a second matrix indicating a similarity between the multiple inducing locations. Optionally, the processor subsystem 140 may be configured to store the determined set of parameters 050, e.g., using data interface 120 and/or otherwise provide the determined set of parameters 050 to a system for applying the model to an input.

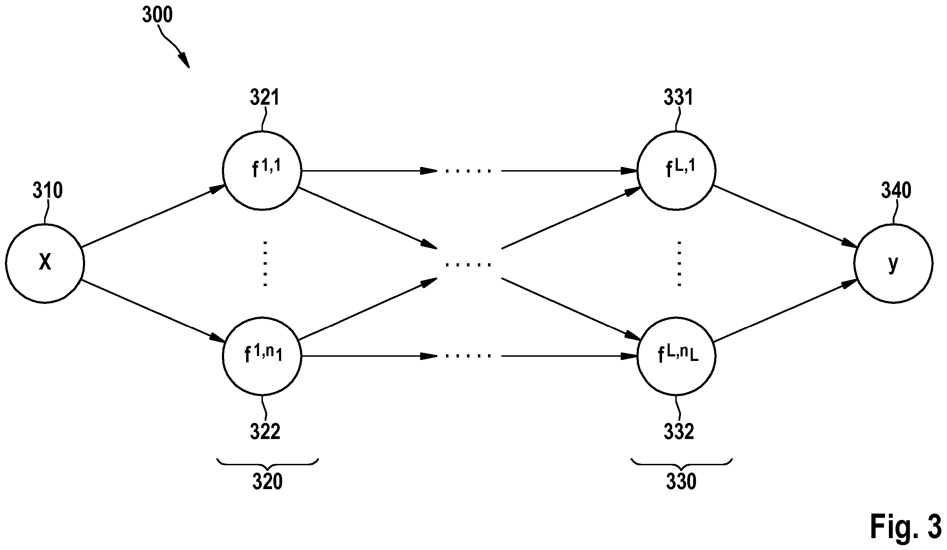

Various details and aspects of the operation of the system 100 will be further elucidated with reference to Fig. 3, including optional aspects thereof.

In general, the system 100 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or Graphical Processing Units (GPUs) and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA). In general, each functional unit of the system may be implemented in the form of a circuit. It is noted that the system 100 may also be implemented in a distributed manner, e.g., involving different devices or apparatuses, such as distributed servers, e.g., in the form of cloud computing.

**Fig. 2** shows a system 200 for applying a probabilistic model to an input. The probabilistic model comprises one or more layers. A layer of the one or more layers may comprise multiple Gaussian processes. The system 200 comprises a data interface 220 and a processor subsystem 240 which may internally communicate via data communication 224. The processor subsystem 240 may be configured to, during operation of the system 200 and using the data interface 220, access the input 060 and set of parameters 050 of the probabilistic model. The set of parameters 050 comprises a set of multiple inducing locations for the multiple Gaussian processes. The set of parameters 050 also comprises parameters of a probability distribution approximating outputs of the multiple Gaussian processes at the multiple inducing locations. The probability distribution comprises a multivariate normal probability distribution. A covariance matrix of the multivariate normal distribution is defined by a Kronecker product of a first matrix indicating a similarity between the multiple Gaussian processes and a second matrix indicating a similarity between the inducing locations.

For example, as shown in Fig. 2, the data interface 220 may provide access 222 to an external data storage 022 which may comprise said data 050, 060. Alternatively, the data 050, 060 may be accessed from an internal data storage which is part of the system 200. Alternatively, the data 050, 060 may be received via a network from another entity. In general, the data interface 220 may take various forms, such as a network interface to a local or wide area network, e.g., the Internet, a storage interface to an internal or external data storage, etc. The data storage 022 may take any known and suitable form.

The processor subsystem 240 is further arranged to, during operation of the system 100, determine a sample of an output of the probabilistic model on the input 060 based on the set of parameters 050 of the probabilistic model. As an optional component, the system 200 may comprise a display output interface (not shown) or any other type of output interface for outputting the sample to a rendering device, such as a display. For example, the display output interface may generate display data for the display which causes the display to render the sample and or an uncertainty estimate thereof in a sensory perceptible manner. As an optional component, the system 200 may comprise one or more sensor interfaces for obtaining at least part of input 060 from one or more sensors. As an optional component, the system 200 may comprise a control interface for controlling a technical system, e.g., a car engine, based on the output of the probabilistic model.

Various details and aspects of the operation of the system 200 will be further elucidated with reference to Fig. 3, including optional aspects thereof.

In general, the system 200 may be embodied as, or in, a single device or apparatus, such as a workstation, e.g., laptop or desktop-based, or a server. The device or apparatus may comprise one or more microprocessors which execute appropriate software. For example, the processor subsystem may be embodied by a single Central Processing Unit (CPU), but also by a combination or system of such CPUs and/or other types of processing units. The software may have been downloaded and/or stored in a corresponding memory, e.g., a volatile memory such as RAM or a non-volatile memory such as Flash. Alternatively, the functional units of the system, e.g., the data interface and the processor subsystem, may be implemented in the device or apparatus in the form of programmable logic, e.g., as a Field-Programmable Gate Array (FPGA). In general, each functional unit of the system may be implemented in the form of a circuit. It is noted that the system 200 may also be implemented in a distributed manner, e.g., involving different devices or apparatuses, such as distributed servers, e.g., in the form of cloud computing.

**Fig. 3** shows a detailed yet non-limiting example of a probabilistic model comprising one or more layers in which a layer of the one or more layers comprises multiple Gaussian processes. In this case, the probabilistic model 300 is a deep GP, or deep Gaussian process, e.g., a multi-GP model with multiple layers.

Generally, various embodiments may relate to a probabilistic model composed of $n$ latent Gaussian processes, GPs, denoted $f^j \colon \mathbb{R}^{D_j} \to \mathbb{R} \; (j = 1, \ldots, n)$. Learning the set of parameters of the probabilistic model may comprise optimizing the set of parameters with respect to a training dataset comprising multiple training inputs and corresponding training outputs. For example, the task may be seen as learning a function $h \colon \mathbb{R}^D \to \mathbb{R}^T$ from $N$ observations $(x_N, y_N) = (x_i, y_i)_{i=1}^{N}$ with training inputs $x_i$ and typically noisy training outputs $y_i$. In case of a multi-dimensional output, each $y_i$ may specify only some of the $T \geq 2$ output components. For example, a typical deep Gaussian process may comprise 2 to 5 layers, with a 10-dimensional input and 10 Gaussian processes per layer, for instance.

The probabilistic model may place a single GP prior $f^j \sim \mathcal{GP}(m^j, k^j)$ on one or more, e.g., each, of the latent functions, with $m^j \colon \mathbb{R}^{D_j} \to \mathbb{R}$ a prior mean function and $k^j \colon \mathbb{R}^{D_j} \times \mathbb{R}^{D_j} \to \mathbb{R}$ a kernel, typically a positive definite kernel. In this example, the $n$ prior GPs are taken to be independent of each other, but as the skilled person understands, a more general setup can also be treated, e.g., a coupled prior over multiple nodes may be employed.

The set of parameters comprises inducing locations for the Gaussian processes. For example, some or all GPs may be equipped with M inducing inputs $z_M^j = (z_i^j)_{i=1}^{M}$ with $z_i^j \in \mathbb{R}^{D_j}$.

As shown for deep GP 300, each layer $l = 1, \ldots, L$ may comprise $n_l \geq 1$ Gaussian processes. For example, shown in the figure is a first layer 320 comprising Gaussian processes $f^{1,1}$, 321, up to $f^{1,n_1}$, 322. Also shown in a figure is a final, Lth layer 330 comprising Gaussian processes $f^{L,1}$, 331, up to $f^{L,n_L}$, 332. A total number of Gaussian processes $n$ of a deep GP 300 may be calculated as $n = \sum_{l=1}^{L} n_l$.

Inputs of a Gaussian processes at layer $l$ may comprise outputs of Gaussian processes of previous layer $f^{l-1}$. For example, a Gaussian process $f^{l,i}$ may represent a map $\mathbb{R}^{n_{l-1}} \to \mathbb{R}$, e.g., the model may be fully connected at this layer. However, a Gaussian process may also map just a subset of values of the previous layer to an output. First layer may have input fN = $X$, 310. Mathematically, relations between layers may be represented as

$$f_i^l = \left( f^{l,1}(f_i^{l-1}), \dots, f^{l,n_l}(f_i^{l-1}) \right)$$

Gaussian process 300 shown in this figure has a single output y, 340, e.g., $T = 1$, obtained by adding Gaussian i.i.d. noise to outputs of layer 330, e.g., $\mathcal{N}(y_i | f_i^L, \sigma^2)$.

Mathematically, an augmented joint probability using the inducing point framework for deep Gaussian process 300 may be denoted:

$$p(y_N, f_N, f_M) = p(y_N | f_N^L) \prod_{l=1}^{L} p(f_N^l | f_M^l) p(f_M^l),$$

where $y_N$ denote training outputs corresponding to respective training inputs, $f_N^l = (f_i^l)_{i=1}^{N}$ denote outputs of the probabilistic model at the training inputs at layer $l$, $f_M^l = (f_i^l)_{i=1}^{M}$ denote outputs of the probabilistic model at the inducing locations at layer $l$. The vectors $f_N$ and $f_M$ are obtained by stacking the respective outputs of the layers.

In various embodiments, regularity of the model may be increased by assuming that latent processes of the same layer have the same structure, e.g. same inducing points and same kernel hyperparameters. For example, the following relations may be assumed to hold:

$$p(f_M^l) = \prod_{j=1}^{n_l} \mathcal{N}(f_M^{lj} | m_M^{lj}, K_{MM}^l),$$

$$p(f_N^l | f_M^l) = \prod_{j=1}^{n_l} \mathcal{N}(f_N^{lj} | \mu_N^{lj}, \Sigma_{NN}^l).$$

Here, $m_M^{lj} = (m^{lj}(f_i^{l-1}))_{i=1}^{M}$, $K_{NN}^l = (k^l(f_i^{l-1}, f_{i'}^{l-1}))_{i,i'=1}^{N}$, $K_{MM}^l = (k^l(z_i^l, z_{i'}^l))_{i,i'=1}^{M}$ and $K_{MN}^l, K_{NM}^l$ analogously. Mean $\mu_N^{lj}$ and covariance matrix $\Sigma_{NN}^l$ from $p(f_N^l | f_M^l)$ may be defined according to the following relations:

$$\mu_N^{lj} = m_N^{lj} + K_{NM}^l K^{l\,-1}_{MM}(f_M^{lj} - m_M^{lj})$$

$$\Sigma_{NN}^l = K_{NN}^l - K_{NM}^l K^{l\,-1}_{MM} K_{MN}^l.$$

The posterior of deep Gaussian process 300 may be approximated by variational inference using the following variational family:

$$q(f_N, f_M) = \prod_{l=1}^{L} p(f_N^l | f_M^l) q(f_M^l).$$

In various embodiments, a stochastic lower bound on the marginal likelihood is obtained by variational inference-type techniques, e.g., doubly stochastic variational inference.

Although Fig. 3 shows a deep GP 300 comprising Gaussian processes 321, 322, 331, 332, the skilled person will understand that the above technical quantities, e.g., of the posterior of a probabilistic model, can be generalized in various ways. For example, the probabilistic model may comprise various other latent variables that are not generated by a Gaussian process, may comprise multiple sets of Gaussian processes at a single layer, e.g., with different hyperparameters for each set, etcetera. On the other hand, also a mathematical description of a probabilistic model with a single layer of Gaussian processes may be derived from the above description by setting L = 1.

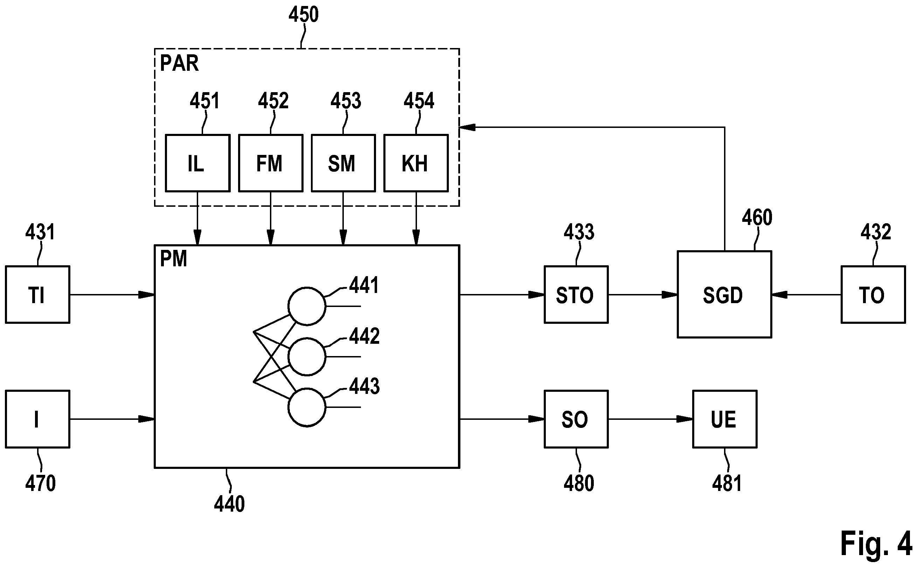

**Fig. 4** shows a detailed yet non-limiting example of how parameters of a probabilistic model may be determined and/or used to apply the probabilistic model to an input.

Shown in Fig. 4 is a probabilistic model **PM,** 440, comprising one or more layers. A layer of the one or more layers comprises multiple Gaussian processes. For illustrative purposes, shown in the figure are three Gaussian processes 441-443, but this is not a limitation. For example, probabilistic model **PM** may correspond to, or comprise, deep Gaussian process 300.

Also shown in the figure are a set of parameters **PAR,** 450, of probabilistic model **PM.** Set of parameters **PAR** may be learned based on a training dataset comprising training inputs **TI,** 431 and training outputs **TO,** 432, e.g., by system 100, as discussed in more detail later. Set of parameters **PAR** may also be used to apply probabilistic model **PM** to an input I, 470, in order to obtain a sampled output **SO,** 480, e.g., by system 200, as discussed in more detail later.

Set of parameters **PAR** may comprise a set of multiple inducing locations **IL,** 451, for the multiple Gaussian processes 441-443. A set of M inducing locations for the set J = $\{j_1, \ldots , j_{N_J}\}$ of multiple Gaussian processes 441-443, may be denoted $z_M^J = (z_i^J)_{i=1}^M$. Typically, the multiple Gaussian processes 441-443 share a common set of inducing locations, but Gaussian processes at different layers typically have a different set of inducing points, and it is also possible that a different set of Gaussian processes at the same layer has a different set of inducing locations, for example. The number of inducing points for a set of multiple Gaussian processes can be 100, for instance.

Set of parameters **PAR** may also comprise parameters of a probability distribution approximating outputs $q(f_M^l)$ of the multiple Gaussian processes at the multiple inducing locations. Such a probability distribution may arise, for example, when using variational inference to approximate the posterior of probabilistic model **PM,** as exemplified above. Interestingly, the probability distribution approximating the outputs of the multiple Gaussian process at the multiple inducing locations may comprise a multivariate normal probability distribution, wherein a covariance matrix of the multivariate normal distribution is defined by a Kronecker product of a first matrix **FM,** 452, indicating a similarity between the multiple Gaussian processes 441-443 and a second matrix **SM,** 453, indicating a similarity between the multiple inducing locations **IL.** For example, first matrix **FM** may be a square matrix of size equal to the number of Gaussian processes $n_l$ and second matrix **SM** second matrix $R^l$ may be a square matrix of size equal to the number of inducing points *M.*

Mathematically, first matrix $C_{n_l}^l$ and second matrix $R_M^l$ form the following Kronecker factorization approximating the probability distribution:

$$q^{\mathrm{kron}}(f_M^l) = \mathcal{N}\left(f_M^l \big| \mu_M^l, C_{n_l}^l \otimes R_M^l\right)$$

Mean $\mu_M^l = (\mu_1^l, \ldots, \mu_{n_l}^l), \mu_i^l \in \mathbb{R}^M$, of the multivariate normal probability distribution $\mathcal{N}$, first matrix $C_{n_l}^l$, and second matrix $R_M^l$ are free variational parameters. In other words, set of parameters **PM** comprises first matrix **FM,** second matrix **SM,** and/or mean $\mu_M^l$ defining the multivariate normal probability distribution.

In various embodiments, first matrix **FM** may be a diagonal matrix, e.g., diagonal elements of first matrix **FM** are free parameters with non-diagonal elements of the first matrix assumed to be zero. As discussed above, this may effectuate a decrease in the number of parameters. In other embodiments, first matrix **FM** has at least one non-zero diagonal element, allowing such a relation between different Gaussian processes to be captured and effectively used when applying model **PM.**

Set of parameters **PAR** may comprise various other parameters, e.g., corresponding to other parts of the probabilistic model **PM,** e.g., other latent processes of the probabilistic model, etc. In particular, various probabilistic models use noisy outputs, e.g., output 340 of deep Gaussian process 300 may be noisy. In such cases, the set of parameters may comprise one or more parameters of a noise distribution for outputs of the probabilistic model **PM,** e.g., a standard deviation σ or variance of a normal distribution, etc.

Set of parameters **PAR** may also comprise one or more hyperparameters for the multiple Gaussian processes 441-443. For example, the set of parameters may comprise hyperparameters of prior mean functions for the multiple Gaussian processes 441-443 and/or kernel hyperparameters **KH,** 454, of kernel functions for the multiple Gaussian processes. In various embodiments, the multiple Gaussian processes share at least some of the hyperparameters, e.g., each Gaussian process of the multiple Gaussian processes may have a kernel defined by one or more kernel hyperparameters **KH.** Gaussian processes at other layers of probabilistic model **PM,** or other sets of Gaussian processes at the same layer as Gaussian processes 441-443, may have different types of prior mean and kernel functions, and/or different hyperparameters for their functions, although it is also possible to use the same set of hyperparameters for all Gaussian processes of the probabilistic model.

Various types of kernels may be used for the Gaussian processes, with accordingly varying sets of kernel hyperparameters **KH.** The kernel used is typically non-degenerate. For example, a squared exponential kernel may be used, e.g., a squared exponential kernel with automatic relevance determination. Mathematically, such a kernel may, given vectors $x, x' \in \mathbb{R}^D$, be defined as

$$k(x, x') = \sigma_0^2 \exp\left[-\frac{1}{2}\sum_{d=1}^{D}\left(\frac{x_d - x_d'}{\lambda_d}\right)^2\right],$$

with the kernel hyperparameters **KH** comprising length-scale hyperparameters $\lambda_d$ for input dimensions D indicating relevance of corresponding input features, and a global, typically non-negative, scaling parameter $\sigma_0^2$.

In various embodiments, the prior mean function for a Gaussian process may be set to zero, e.g., in this case, no hyperparameters for defining the prior mean function may be needed. In other cases, prior mean functions with hyperparameters may be used, e.g., a polynomial prior mean function, e.g., coefficients of which are learned as hyperparameters.

As mentioned, set of parameters **PAR** may be determined, e.g., learned, based on a training dataset comprising multiple training inputs **TI** and training outputs **TO.** Training may comprise optimizing set of parameters **PAR** with respect to the training dataset, e.g., by choosing set of parameters **PAR** such that probabilistic model **PM** best generalizes from training inputs **TI** and training outputs **TO** to new test points.

In various embodiments, optimizing set of parameters **PAR** comprises maximizing an evidence lower bound with respect to the training dataset. The use of an evidence lower bound is not necessary: other ways of capturing correspondence of the probabilistic model **PM** to the training dataset, e.g., measuring a difference between outputs of the probabilistic model **PM** for training inputs **TI** and training outputs **TO** is also possible. Since an exact computation of the evidence lower bound or other optimization targets may be infeasible and/or computationally expensive, in various embodiments, the quantity to be optimized, e.g., the evidence lower bound, is stochastically approximated. In any case, the quantity to be optimized may be captured as an objective function to be optimized using known optimization techniques. For instance, in the example shown in Fig. 4, stochastic gradient descent **SGD,** 460 is performed on an objective function, in this case equal to the evidence lower bound. Known optimization frameworks may be used, e.g., implementations of stochastic gradient descent based on tensorflow, etc.

For example, mathematically, an evidence lower bound for a deep Gaussian process as shown in Fig. 3 may be derived as follows using doubly stochastic variational inference:

$$\mathcal{L} = \int q(f_N, f_M) \log \frac{p(y_N, f_N, f_M)}{q(f_N, f_M)} df_N df_M$$

$$= \int q(f_N, f_M) \log \frac{p(y_N|f_N^L) \prod_{l=1}^{L} p(f_N^l|f_M^l) p(f_M^l)}{\prod_{l=1}^{L} p(f_N^l|f_M^l) q(f_M^l)} df_N df_M$$

$$= \int q(f_N, f_M) \log p(y_N|f_N^L) df_N df_M - \sum_{l=1}^{L} KL(q(f_M^l) \| p(f_M^l))$$

$$= \sum_{i=1}^{N} \int q(f_i^L) \log p(y_i|f_i^L) df_i^L - \sum_{l=1}^{L} KL(q(f_M^l) \| p(f_M^l)),$$

where $q(f_N, f_M), p(y_N, f_N, f_M)$ are as discussed above and

$$q(f_i^L) = \int \prod_{l=1}^{L} p(f_i^l|f_M^l) q(f_M^l) df_M^1 \dots f_M^L df_i^1 \dots df_i^{L-1}$$

$$= \int \prod_{l=1}^{L} q(f_i^l) df_i^1 \dots df_i^{L-1} \tag{49}$$

is the marginal of the final layer.

It is noted that that the evidence lower bound for this type of probabilistic model comprises term $\sum_{i=1}^{N} \int q(f_i^L) \log p(y_i|f_i^L) df_i^L$ that can be approximated by sampling one or more outputs $f_i^L \sim q(f_i^L)$ of the probabilistic model **PM** given a training input $x_i$ of set **TI,** and computing a likelihood $\log p(y_i|f_i^L)$ of obtaining training output $y_i$ of set **TO** corresponding to training input $x_i$ from the sampled output under a noise distribution, in this case, the noise distribution of output y, 340. Sampling of $q(f_i^L)$ may be performed layer-wise, e.g., sampled outputs of the previous layer may be used to sample at the current layers, e.g., thereby, analytical treatment of the model as a whole may be avoided. As the skilled person understands, such terms arise generally also for other types of probabilistic models **PM** comprising multiple Gaussian processes.

Specifically, in order to sample the output **STO,** 433, of the probabilistic model for a training input of set **TI**, a sample probability distribution may be determined of outputs of the multiple Gaussian processes for the training input by marginalizing out the probability distribution $q_{\text{kron}}(f_M^l)$ in a layer approximating the outputs of the multiple Gaussian processes at the multiple inducing locations from a joint probability distribution, e.g., $q(f_N^l, f_M^l)$. The layer outputs of the multiple Gaussian processes for the training input may then be sampled according to the sample probability distribution. Interestingly, the Kronecker product arising in probabilistic model **PM** may lead to expressions in terms of first matrix **FM** and second matrix **SM** that can be used to perform such sampling particularly efficiently, e.g., without explicitly storing or computing their Kronecker product. For example, continuing with the above derivation for deep Gaussian process 300, marginalization of the variational posterior over inducing outputs $f_M^l$ may be performed as follows:

$$q(f_N^l | \mu_N^l, \Sigma_{NN}^l) = \int p(f_N^l|f_M^l) q_{\text{kron}}(f_M^l) df_M^l$$

$$= \int \prod_{j=1}^{n_l} \mathcal{N}(f_N^{lj} | \mu_N^{lj}, \Sigma_{NN}^l) \mathcal{N}(f_M^l | \mu_M^l, C_{n_l}^l \otimes R_M^l) df_M^l$$

$$= \mathcal{N}(f_N^l | m_N^{lj} + K_{NM}^l K_{MM}^{l}{}^{-1}(\mu_M^{lj} - m_M^{lj}),$$

$$1 \otimes \Sigma_{NN}^l + C_{n_l}^l \otimes K_{NM}^l K_{MM}^{l}{}^{-1} R_M^l K_{MM}^{l}{}^{-1} K_{MN}^l.$$

E.g., a multivariate normal distribution with this mean and covariance is obtained. Samples from the approximate predictive distribution may be obtained, e.g., by substituting a single training input TI or input I for the training dataset $f_N^l$ above. Hence, as exemplified here, sampling an output of the multiple Gaussian processes may comprise determining a covariance matrix based on a Kronecker product of first matrix and function of the second matrix. The Kronecker product of the first and second matrix is not needed.

As can be observed, marginals $f_i^l$ in this example depend only on corresponding inputs $f_i^{l-1}$, e.g., the lower bound may be decomposed between training inputs **TI.** As a consequence of modelling the outputs of the multiple Gaussian processes by a multivariate normal probability distribution, function values of the same layer $f_i^{lj}, f_i^{lj'}$ in this example are coupled. Accordingly, the outputs of the multiple Gaussian processes may be sampled according to a joint probability distribution. Furthermore, it can be observed that determining the above probability distribution comprises inverting a single M × M matrix $K_{MM}^l$ for the group of Gaussian processes 341-343 instead of, e.g., inverting separate matrices for each of the Gaussian processes in techniques where the Gaussian processes are not modelled by a joint multivariate normal distribution as in probabilistic model **PM,** representing significant computational savings.

Various optimizations for determining set of parameters **PAR** may also involve optimizing a Kullback-Leibler divergence between the probability distribution approximating the outputs of the multiple Gaussian processes at the multiple inducing locations, e.g., $q^{\text{kron}}(f_M^l)$, and a probability distribution of the outputs of the multiple Gaussian processes at the multiple inducing locations, e.g., p(fM). For example, such a Kullback-Leibler divergence may occur in an evidence lower bound such as bound $\mathcal{L}$ derived above, but may also be used in other optimization targets to capture a difference between the approximated posterior and prior probability distributions. Interestingly, parametrization **PAR** based on the Kronecker product allows the Kullback-Leibler to be determined efficiently. For example, for deep Gaussian process 300, this leads to the following expression for the KL divergence:

$$KL(q^{\mathrm{kron}}(f_M^l) \parallel p(f_M^l)) = KL\big(\mathcal{N}(f_M^l | \mu_M^l, C_{n_l}^l \otimes R_M^l) \parallel \mathcal{N}(f_M^l | 0, 1_{n_l} \otimes K_{MM}^l)\big)$$

$$= \frac{1}{2}(Tr[C_{n_l}^l] \cdot Tr\left[K_{MM}^{l}{}^{-1} R_M^l\right] + \sum_{j=1}^{n_l} \mu_M^{lj}{}^\top K_{MM}^{l}{}^{-1} \mu_M^{lj} - n_l M$$

$$+ n_l \log|K_{MM}^l| - M\log|C_{n_l}^l| - n_l\log|R_M^l|).$$

Hence, as exemplified here, the KL divergence may be computed based on one or more separate functions, e.g., traces and/or logarithms, of the first and second matrix, without using or computing their Kronecker product.

A specific example of determining an evidence lower bound that may be maximized in order to determine set of parameters **PAR,** for example, by stochastic gradient descent **SGD,** is now given in detail in algorithmic form:

**elbo**$(X_B, y_B)$**:**

- computes a stochastic approximation to the lower bound to the model evidence

- batch of the training dataset $\{(x_1, y_1), \dots, (x_{N_B}, y_{N_B})\}$ with training inputs **TI** and outputs **TO** of size $N_B$

- $K$: number of Monte Carlo samples

- $L$: number of layers of probabilistic model **PM**

elbo $\leftarrow 0$

\# compute data fit

**for** each data point $i = 1, \dots, N_B$ **do**

    **for** each repetition $k = 1, \dots, K$ **do**

        $f_{i,k}^L \leftarrow \mathrm{drawSample}(x_i)$

        elbo $\leftarrow$ elbo $+ \log p(y_i | f_{i,k}^L)$    *\# e.g. according to Gaussian $\epsilon \sim \mathcal{N}(0, \sigma^2)$*

    **end**

**end**

$$\text{elbo} \leftarrow \frac{\text{elbo}}{N_B K} * N$$

**for** each layer $l = 1, \dots, L$ **do**

$$\text{elbo} \leftarrow \text{elbo} + KL(q^{\text{kron}}(f_M^l) \parallel p(f_M^l))$$

**return** elbo

As can be observed from the above specification, in the first loop, outputs $f_{i,k}^L$ of the probabilistic model **PM** can be sampled given respective training inputs $x_i$, and likelihoods of obtaining the corresponding training outputs $y_i$ may be determined and added to the evidence lower bound in a Monte Carlo fashion.

Furthermore, the Kullback-Leibler divergence between the probability distribution approximating the outputs of the multiple Gaussian processes at the multiple inducing locations and a probability distribution of the outputs of the multiple Gaussian processes at the multiple inducing locations may be determined for each group of multiple Gaussian processes, for example, as detailed above.

In order to sample an output of deep Gaussian process PM given a training input x, the following procedure may be used:

**drawSample**$(x)$:

$f^0 \leftarrow x$

**for** each layer $l = 1, \dots, L$ **do**

    $v^l, \Lambda^l \leftarrow$ parameters of distribution $q(f^l \mid \mu^l, \Sigma^l)$ for point $f^{l-1}$

    $f^l \leftarrow \mathcal{N}(v^l, \Lambda^l)$            # draw from $n_l$-variate Gaussian distribution

**end**

**return** $f^L$

Probabilistic model **PM** may be applied to an input I, 470, by determining a sample **SO**, 480, of an output of the probabilistic model on input I based on the set of parameters **PAR** of probabilistic model **PM**. In other words, sampling output **SO** may be performed layer-by-layer and may comprise determining a sample probability distribution of outputs of the multiple Gaussian processes at a layer for input **I** by marginalizing out the probability distribution approximating the outputs of the multiple Gaussian processes 441-443 at the layer at the multiple inducing locations **IL** from a joint probability distribution, and sampling outputs of the multiple Gaussian processes at the layer for the input I according to the sample probability distribution. For example, in order to obtain sample **SO,** the procedure **drawSample** presented above may be used. Note that, in order to obtain sampled output **SO,** modelled output noise, e.g., noise added to output node 330 of deep Gaussian process 300, may be included, e.g., in order to compare a prediction with an observed output.

Applying the probabilistic model to input I may also comprise determining multiple samples **SO** of the output of the probabilistic model **PM** on the input **I**. For example, based on the multiple samples, an uncertainty estimate may be derived such as a variance, a standard deviation, a histogram, etcetera. For example, the following procedure may be used to determine multiple samples for a test data point x*:

```
predict(x*):

-      return samples of predictive distribution according to probabilistic model PM

-      x*: test data point

-      K : number of Monte Carlo samples


for each repetition i = 1, ..., K do

        f*_k ← drawSample(x*)

end


return {f*_1, ..., f*_K}
```

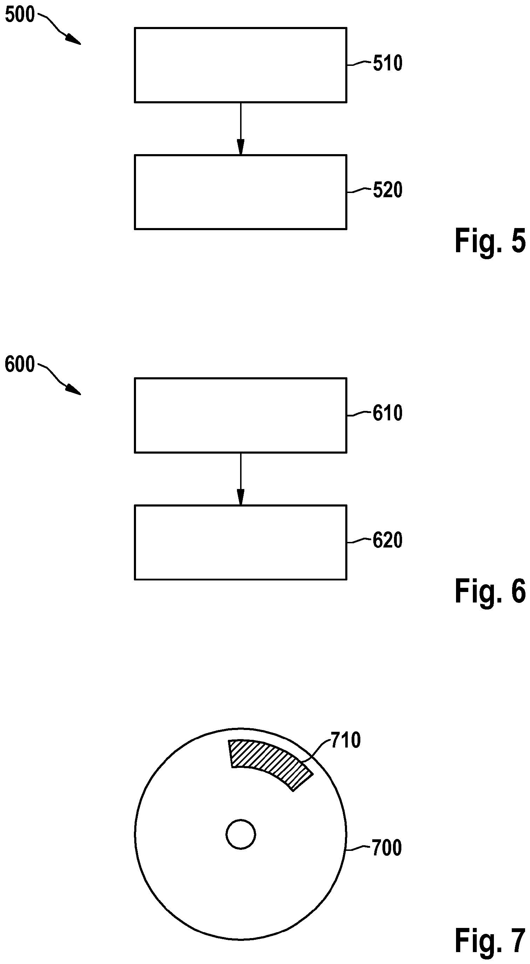

**Fig. 5** shows a block-diagram of computer-implemented method 500, which is not within the scope of the claims, of learning a set of parameters of a probabilistic model, the probabilistic model comprising one or more layers, a layer of the one or more layers comprising multiple Gaussian processes. The method 500 may correspond to an operation of the system 100 of Fig. 1. However, this is not a limitation, in that the method 500 may also be performed using another system, apparatus or device.

The method 500 may comprise, in an operation titled "ACCESSING TRAINING DATASET", accessing 510 a training dataset comprising multiple training inputs and corresponding training outputs. The method 500 may further comprise, determining the set of parameters of the probabilistic model by, in an operation titled "OPTIMIZING SET OF PARAMETERS", optimizing 520 the set of parameters with respect to the training dataset. The set of parameters may comprise a set of multiple inducing locations for the multiple Gaussian processes. The set of parameters may further comprise parameters of a probability distribution approximating outputs of the multiple Gaussian processes at the multiple inducing locations, wherein the probability distribution comprises a multivariate normal probability distribution, a covariance matrix of the multivariate normal distribution being defined by a Kronecker product of a first matrix indicating a similarity between the multiple Gaussian processes and a second matrix indicating a similarity between the multiple inducing locations.

**Fig. 6** shows a block-diagram of computer-implemented method 600 of applying a probabilistic model to an input, the probabilistic model comprising one or more layers, a layer of the one or more layers comprising multiple Gaussian processes. The method 600 may correspond to an operation of the system 200 of Fig. 2. However, this is not a limitation, in that the method 600 may also be performed using another system, apparatus or device.

The method 600 may comprise, in an operation titled "ACCESSING INPUT, SET OF PARAMETERS", accessing 610 the input and a set of parameters of the probabilistic model. The set of parameters may comprise a set of multiple inducing locations for the multiple Gaussian processes. The set of parameters may further comprise parameters of a probability distribution approximating outputs of the multiple Gaussian processes at the multiple inducing locations, wherein the probability distribution comprises a multivariate normal probability distribution, a covariance matrix of the multivariate normal distribution being defined by a Kronecker product of a first matrix indicating a similarity between the multiple Gaussian processes and a second matrix indicating a similarity between the inducing locations. The method 600 may further comprise, in an operation titled "DETERMINING OUTPUT SAMPLE", determining 620 a sample of an output of the probabilistic model on the input based on the set of parameters of the probabilistic model.

It will be appreciated that, in general, the operations of method 500 of Fig. 5 and method 600 of Fig. 6 may be performed in any suitable order, e.g., consecutively, simultaneously, or a combination thereof, subject to, where applicable, a particular order being necessitated, e.g., by input/output relations.

The method(s) may be implemented on a computer as a computer implemented method, as dedicated hardware, or as a combination of both. As also illustrated in **Fig. 7,** instructions for the computer, e.g., executable code, may be stored on a computer readable medium 700, e.g., in the form of a series 710 of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, servers, online software, etc. Fig. 7 shows an optical disc 700. Alternatively, the computer readable medium 700 may comprise transitory or non-transitory data 710 representing a set of parameters as described elsewhere in this specification.

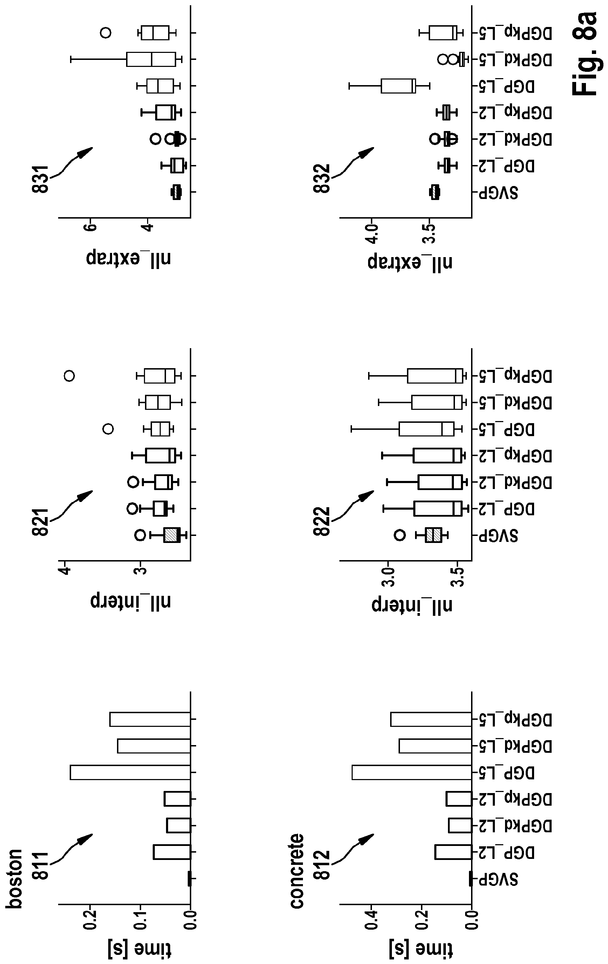

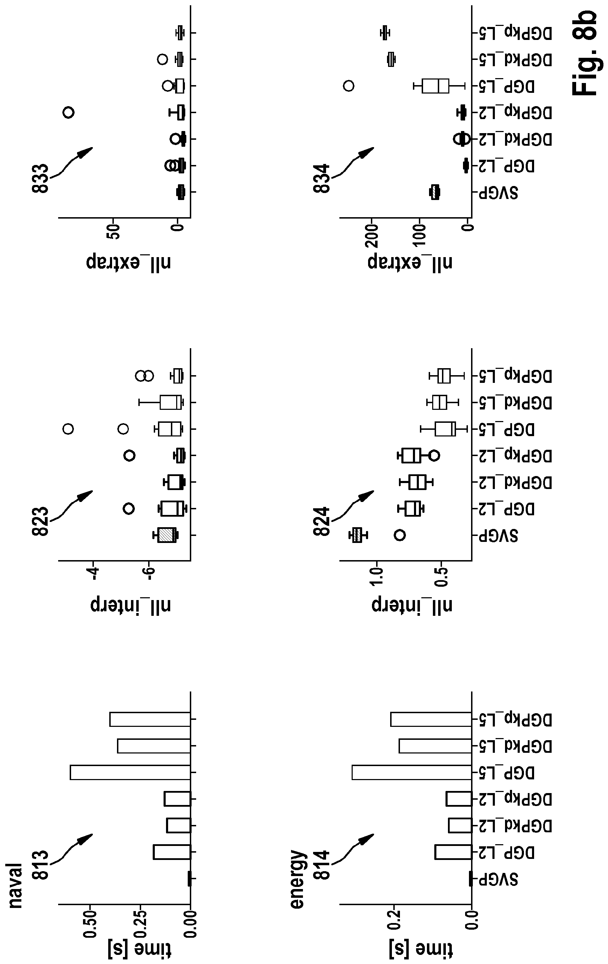

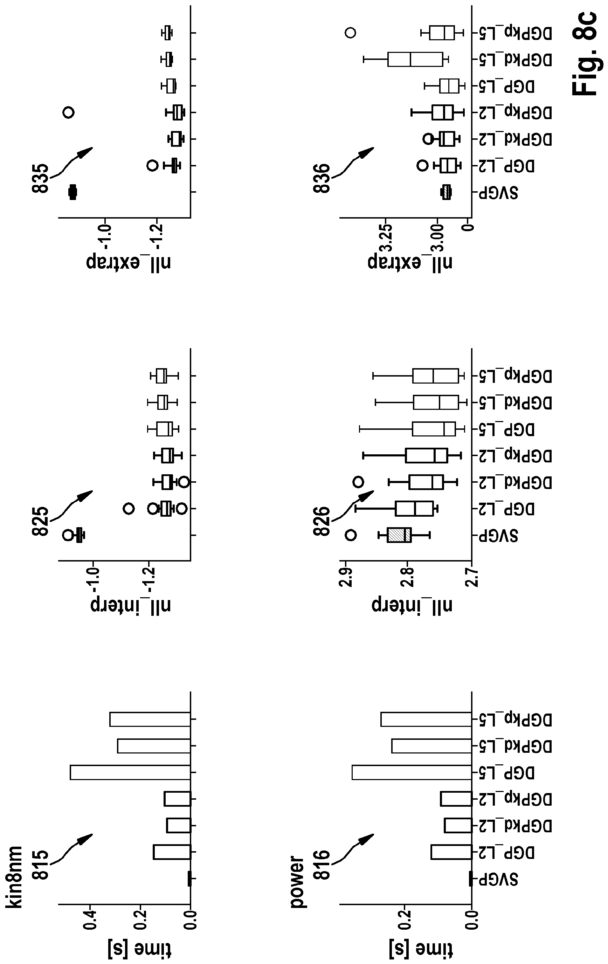

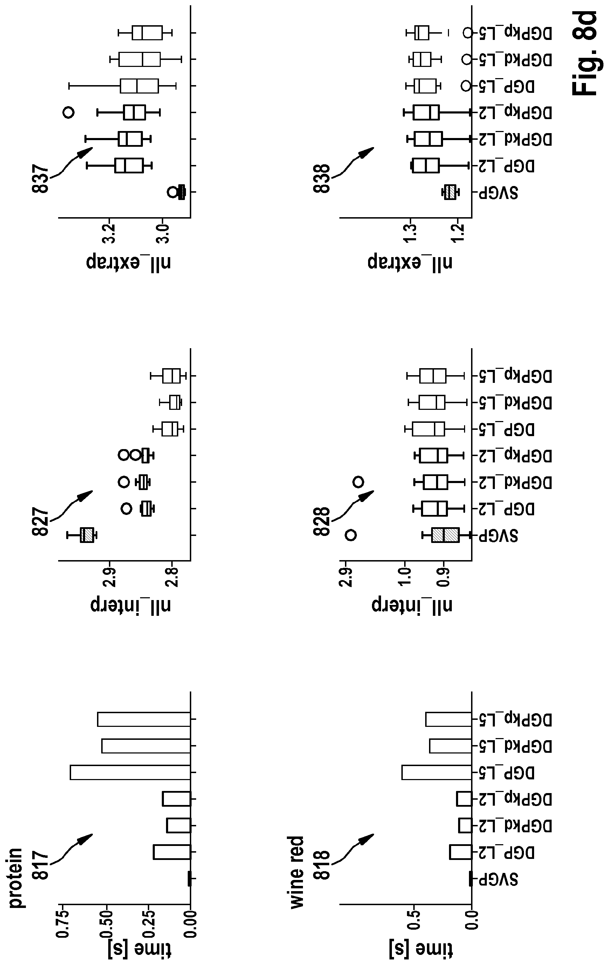

**Figs. 8a-8d** show an evaluation of probabilistic models according to various embodiments on several relevant benchmarks.

The probabilistic models evaluated are deep Gaussian Processes as described above, namely probabilistic models comprising multiple layers of Gaussian Processes in which the probability distributions approximating the outputs of the Gaussian processes at each layer are multivariate normal with a covariance matrix given as a Kronecker product between a first and a second matrix. In some cases, the first and second matrix were general matrices, e.g., all entries of the matrices were parameters to be optimised. As discussed, this provides a model with improved coupling of the latent Gaussian processes. In other cases, the first matrix was chosen to be a diagonal matrix, providing a reduction in the number of parameters. The probabilistic models are compared to a standard sparse Gaussian process and a non-structured deep GP variant, e.g., in which each Gaussian process is modelled using a separate covariance matrix.

In order to evaluate the models, eight relevant test datasets from the UCI benchmark dataset, https://archive.ics.uci.edu/ml/, were chosen. Mostly, the datasets model relatively complex non-linear physical models. For example, the UCI "concrete" dataset provides data of concrete compressive strength as a highly nonlinear function of age and ingredients. The "naval" dataset provides maintenance state data of gas turbines as a function of various measures at steady state of the physical asset, such as shaft torque, rate of revolutions, inlet and outlet temperature and pressure, etc. The "energy" dataset captures heating load and cooling load requirements of buildings, that is, energy efficiency, as a function of building parameters. "kin8nm" captures forward dynamics of an 8 link all-revolute robot arm with an aim to predict the distance of the end-effector from a target based on joint positions, twist angles, etc. The "power" dataset provides net hourly electrical energy output of a power plant based on temperature, ambient pressure, etc. The "protein" dataset contains data on proteins; the "boston" dataset is on housing in Boston; the "wine_red" dataset allows to determine wine quality based on physicochemical tests.

For analysing the extrapolation behaviour of the approach, the samples were sorted according to the first principal component of the standardized data. The decile with the smallest value was used for testing the extrapolation scenario and randomly selected 10% of the remaining data were used for testing the interpolation scenario. For each dataset, the experiment was repeated with ten independent training-interpolation splits, while keeping the extrapolation sample set intact.

The number of Gaussian processes layers was min(10,D), with D the input dimension. Optimization was performed using the Adam Optimizer as described in "Adam: A Method for Stochastic Optimization" by Kingma and Ba, 2014 (available at https://arxiv.org/abs/1412.6980 and incorporated herein by reference). The learning rate=0.01, batch size=min(1000,$N$)) with N the number of data points. The optimizer was run for 20,000 iterations to minimize the evidence lower bound with respect to the set of parameters, including hyperparameters, inducing points and variational parameters. Three Monte Carlo samples per datapoint were used to stochastically evaluate the lower bound. A linear mean term was used to avoid problems with vanishing gradients. Performance of non-structured deep GP (DGP) is compared to a deep GP in which the covariance matrix of each layer is a Kronecker product (DGPkp) and a simplified version of DGPkp in which the first matrix is diagonal (DGPkd). All deep GP models were run with 2 and 5 layers.

Figs. 8a-8d shows the comparison of the deep GP variants on the UCI benchmark datasets. Eight UCI benchmark datasets are studied with respect to the metrics: training time 811-818, negative log likelihood on interpolation set 821-828, and negative log likelihood on extrapolation set 831-838. It is found that using a Kronecker-structured covariance matrix decreases training time compared to a non-structured family 811-818 while maintaining the predictive performance 821-828, 831-838 when keeping the number of layers fixed.

When assessing interpolation performance of the different deep GP models, it is found that DGP outperforms a sparse GP (SVGP) on the *energy, kin8nm, power* and *protein* datasets, and performs equally well on *boston, concrete, naval* and *wine* red datasets. No performance difference between the deep GP variants is observed in graphs 821-828, confirming that the Kronecker approximation is sufficiently accurate.

Runtime of the different models is measured for a single optimization step on an Intel Xeon CPU E5-1620, 3.50 GHz, 8 cores. Beneficially, a reduction in runtime is observed in graphs 811-818 from the non-structured model (DGP) to the Kronecker models, DGPkp and DGPkd, when keeping the number of layers fixed. An increase in convergence speed when using Kronecker models is also observed due to the smaller number of parameters. Regarding extrapolation, a consistent performance increase compared to SVGP is observed for *kin8nm,* while performance on other datasets is broadly similar, see graphs 831-838. Use of the verb "comprise" and its conjugations does not exclude the presence of elements or stages other than those stated in a claim. The article "a" or "an" preceding an element does not exclude the presence of a plurality of such elements. Expressions such as "at least one of" when preceding a list or group of elements represent a selection of all or of any subset of elements from the list or group. For example, the expression, "at least one of A, B, and C" should be understood as including only A, only B, only C, both A and B, both A and C, both B and C, or all of A, B, and C. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

**Claims**

1. System (200) for controlling a technical system based on an output which is obtained by applying a probabilistic model of the technical system to an input, wherein the technical system is a robot, a vehicle, a domestic appliance, a power tool, a manufacturing machine, a personal assistant, an access control system or a car engine, the probabilistic model comprising one or more layers, a layer of the one or more layers comprising multiple Gaussian processes, the system comprising:

   - a data interface (220) for accessing a set of parameters (050) of the probabilistic model, wherein the probabilistic model has been learned to predict one or more physical output quantities of the technical system based on at least one or more physical input quantities obtained from one or more sensors, wherein the set of parameters comprises at least:

      - a set of multiple inducing locations for the multiple Gaussian processes;
      - parameters of a probability distribution of a variational inference approximation of outputs of the multiple Gaussian processes at the multiple inducing locations, wherein the probability distribution comprises a multivariate normal probability distribution, a covariance matrix of the multivariate normal distribution being defined by a Kronecker product of a first matrix indicating a similarity between the multiple Gaussian processes and a second matrix indicating a similarity between the inducing locations, the first matrix and the second matrix being defined by variational parameters of the variational inference approximation;
      - one or more interfaces for accessing the input, wherein the input is obtained from one or more sensors;
      - a processor subsystem (240) arranged to determine a sample of an output of the probabilistic model on the input (060) based on the set of parameters (050) of the probabilistic model; and
      - a control interface configured for controlling the technical system based on the output of the probabilistic model.

2. System (200) as in claim 1, wherein the processor is configured to determine multiple samples of the output of the probabilistic model on the input and determine an uncertainty estimate therefrom.

3. System according to any one of the preceeding claims, wherein:

   - in case that the technical system is the car engine, the probabilistic model is learned to predict an emission value of the car engine based on speed and load or the corresponding ECU parameters; or
   - in case that the technical system is the robot, the probabilistic model is an inverse dynamics model learned to predict a torque from inputs comprising one or more of a position, a velocity, and an acceleration of the robot.

4. Computer-implemented method (600) of applying a probabilistic model of a technical system to an input obtained from one or more sensors, wherein the technical system is a robot, a vehicle, a domestic appliance, a power tool, a manufacturing machine, a personal assistant, an access control system or a car engine, wherein the probabilistic model has been learned to predict one or more physical output quantities of the technical system based on at least one or more physical input quantities obtained from one or more sensors, and wherein the probabilistic model comprises one or more layers, a layer of the one or more layers comprising multiple Gaussian processes, the method comprising:

   - accessing (610) the input and a set of parameters of the probabilistic model, wherein the set of parameters comprises at least:

      - a set of multiple inducing locations for the multiple Gaussian processes;
      - parameters of a probability distribution of a variational inference approximation of outputs of the multiple Gaussian processes at the multiple inducing locations, wherein the probability distribution comprises a multivariate normal probability distribution, a covariance matrix of the multivariate normal distribution being defined by a Kronecker product of a first matrix indicating a similarity between the multiple Gaussian processes and a second matrix indicating a similarity between the inducing locations, the first matrix and the second matrix being defined by variational parameters of the variational inference approximation;

- determining (620) a sample of an output of the probabilistic model on the input based on the set of parameters of the probabilistic model; and
- controlling the technical system based on the output of the probabilistic model.

5. Method according to claim 4, wherein the probabilistic model has been trained by:

- accessing (510) a training dataset comprising multiple training inputs and corresponding training outputs;
- determining the set of parameters of the probabilistic model by optimizing (520) the set of parameters with respect to the training dataset, wherein the set of parameters comprises at least:

- a set of multiple inducing locations for the multiple Gaussian processes;
- parameters of a probability distribution of a variational inference approximation of outputs of the multiple Gaussian processes at the multiple inducing locations, wherein the probability distribution comprises a multivariate normal probability distribution, a covariance matrix of the multivariate normal distribution being defined by a Kronecker product of a first matrix indicating a similarity between the multiple Gaussian processes and a second matrix indicating a similarity between the multiple inducing locations, the first matrix and the second matrix being defined by variational parameters of the variational inference approximation.

6. Method according to claim 5, wherein optimizing the set of parameters comprises maximizing an evidence lower bound with respect to the training dataset.

7. Method according to claim 5 or 6, wherein optimizing the set of parameters comprises sampling an output of the probabilistic model given a training input and computing a likelihood of obtaining the training output corresponding to the training input from the sampled output under a noise distribution.

8. Method according to claim 7, wherein sampling the output of the probabilistic model for the training input comprises:

- determining a sample probability distribution of outputs of the multiple Gaussian processes for the training input by marginalizing out the probability distribution approximating the outputs of the multiple Gaussian processes at the multiple inducing locations from a joint probability distribution;
- sampling outputs of the multiple Gaussian processes for the training input according to the sample probability distribution.

9. Method according to any one of claims 6 to 8, wherein maximizing the evidence lower bound comprises performing stochastic gradient descent on an objective function comprising the evidence lower bound.

10. Method according to any one of claims 5 to 9, wherein priors of the multiple Gaussian processes that are approximated by variational inference are independent of each other.

11. Method according to any one of claims 5 to 10, wherein diagonal elements of the first matrix are free parameters of the variational inference approximation and non-diagonal elements of the first matrix are assumed by the system to be zero.

12. Method according to any one of claims 5 to 11, wherein the set of parameters of the probabilistic model comprises one or more kernel hyperparameters, each Gaussian process of the multiple Gaussian processes having a kernel defined by the one or more kernel hyperparameters.

13. Method according to any one of the preceding claims 4 to 12, wherein:

- in case that the technical system is the robot, the probabilistic model is learned to predict an emission value of the car engine based on speed and load or the corresponding ECU parameters; or
- in case that the technical system is the robot, the probabilistic model is an inverse dynamics model learned to predict a torque from inputs comprising one or more of a position, a velocity, and an acceleration of the robot.

14. A computer-readable medium (700) comprising instructions which, when executed by a processor, cause the processor to perform the computer-implemented method according to any one of claims 4 to 13.

**Patentansprüche**

1. System (200) zum Steuern eines technischen Systems basierend auf einer Ausgabe, die erhalten wird, indem ein probabilistisches Modell des technischen Systems auf eine Eingabe angewandt wird, wobei das technische System ein Roboter, ein Fahrzeug, ein Haushaltsgerät, ein Elektrowerkzeug, eine Fertigungsmaschine, ein persönlicher Assistent, ein Zugangssteuerungssystem oder ein Fahrzeugmotor ist, wobei das probabilistische Modell eine oder mehrere Schichten umfasst, wobei eine Schicht der einen oder mehreren Schichten mehrere Gaußsche Prozesse umfasst, wobei das System umfasst:

   - eine Datenschnittstelle (220) zum Zugreifen auf einen Satz von Parametern (050) des probabilistischen Modells, wobei das probabilistische Modell gelernt hat, eine oder mehrere physikalische Ausgabegrößen des technischen Systems basierend auf mindestens einer oder mehreren physikalischen Eingabegrößen vorherzusagen, die von einem oder mehreren Sensoren erhalten werden, wobei der Satz von Parametern mindestens umfasst:

      - einen Satz von mehreren induzierenden Orten für die mehreren Gaußschen Prozesse;
      - Parameter einer Wahrscheinlichkeitsverteilung einer variationellen Inferenzapproximation der Ausgaben der mehreren Gaußschen Prozesse an den mehreren induzierenden Orten, wobei die Wahrscheinlichkeitsverteilung eine multivariate Normalverteilung umfasst, wobei eine Kovarianzmatrix der multivariaten Normalverteilung durch ein Kronecker-Produkt einer ersten Matrix, die eine Ähnlichkeit zwischen den mehreren Gaußschen Prozessen anzeigt, und einer zweiten Matrix definiert wird, die eine Ähnlichkeit zwischen den induzierenden Orten anzeigt, wobei die erste Matrix und die zweite Matrix durch variationelle Parameter der variationellen Inferenzapproximation definiert werden;
      - eine oder mehrere Schnittstellen, um auf die Eingabe zuzugreifen, wobei die Eingabe von einem oder mehreren Sensoren erhalten wird;
      - ein Prozessorteilsystem (240), das geeignet ist, um, auf der Eingabe (060), ein Sample einer Ausgabe des probabilistischen Modells basierend auf dem Satz von Parametern (050) des probabilistischen Modells zu bestimmen; und
      - eine Steuerschnittstelle, die konfiguriert ist zum Steuern des technischen Systems basierend auf der Ausgabe des probabilistischen Modells.

2. System (200) nach Anspruch 1, wobei der Prozessor konfiguriert ist, um, auf der Eingabe, mehrere Samples der Ausgabe des probabilistischen Modells zu bestimmen und um daraus eine Unsicherheitsschätzung zu bestimmen.

3. System nach einem der vorhergehenden Ansprüche, wobei:

   - in einem Fall, in dem das technische System der Fahrzeugmotor ist, das probabilistische Modell lernt, einen Emissionswert des Fahrzeugmotors basierend auf Geschwindigkeit und Belastung oder den entsprechenden ECU-Parametern vorherzusagen; oder
   - in einem Fall, in dem das technische System der Roboter ist, das probabilistische Modell ein inverses dynamisches Modell ist, das lernt ein Drehmoment aus den Eingaben vorherzusagen, die eine oder mehrere einer Position, einer Geschwindigkeit und einer Beschleunigung des Roboters beinhalten.

4. Computerimplementiertes Verfahren (600) zum Anwenden eines probabilistischen Modells eines technischen Systems auf eine Eingabe, die von einem oder mehreren Sensoren erhalten wird, wobei das technische System ein Roboter, ein Fahrzeug, ein Haushaltsgerät, ein Elektrowerkzeug, eine Fertigungsmaschine, ein persönlicher Assistent, ein Zugangssteuerungssystem oder ein Fahrzeugmotor ist, wobei das probabilistische Modell gelernt hat, eine oder mehrere physikalische Ausgabegrößen des technischen Systems basierend auf mindestens einer oder mehreren physikalischen Eingabegrö-ßen vorherzusagen, die von einem oder mehreren Sensoren erhalten werden, und wobei das probabilistische Modell eine oder mehrere Schichten umfasst, wobei eine Schicht der einen oder mehreren Schichten mehrere Gaußsche Prozesse umfasst, wobei das Verfahren umfasst:

   - Zugreifen (610) auf die Eingabe und auf einen Satz von Parametern des probabilistischen Modells, wobei der Satz von Parametern mindestens umfasst:

      - einen Satz von mehreren induzierenden Orten für die mehreren Gaußschen Prozesse;
      - Parameter einer Wahrscheinlichkeitsverteilung einer variationellen Inferenzapproximation der Ausgaben der mehreren Gaußschen Prozesse an den mehreren induzierenden Orten, wobei die Wahrscheinlichkeitsverteilung eine multivariate Normalverteilung umfasst, wobei eine Kovarianzmatrix der multivariaten Normalverteilung durch ein Kronecker-Produkt einer ersten Matrix, die eine Ähnlichkeit zwischen den mehreren Gaußschen Prozessen anzeigt, und einer zweiten Matrix definiert wird, die eine Ähnlichkeit zwischen den induzierenden Orten anzeigt, wobei die erste Matrix und die zweite Matrix durch variationelle Parameter der variationellen Inferenzapproximation definiert werden;

- Bestimmen (620), auf der Eingabe, eines Samples einer Ausgabe des probabilistischen Modells basierend auf dem Satz von Parametern des probabilistischen Modells; und
- Steuern des technischen Systems basierend auf der Ausgabe des probabilistischen Modells.

5. Verfahren nach Anspruch 4, wobei das probabilistische Modell trainiert wurde durch:

- Zugreifen (510) auf einen Trainingsdatensatz, der mehrere Trainingseingaben und entsprechende Trainingsausgaben umfasst;
- Bestimmen des Satzes von Parametern des probabilistischen Modells, indem der Satz von Parametern in Bezug auf den Trainingsdatensatz optimiert wird (520), wobei der Satz von Parametern mindestens umfasst:

- einen Satz von mehreren induzierenden Orten für die mehreren Gaußschen Prozesse;
- Parameter einer Wahrscheinlichkeitsverteilung einer variationellen Inferenzapproximation der Ausgaben der mehreren Gaußschen Prozesse an den mehreren induzierenden Orten, wobei die Wahrscheinlichkeitsverteilung eine multivariate Normalverteilung umfasst, wobei eine Kovarianzmatrix der multivariaten Normalverteilung durch ein Kronecker-Produkt einer ersten Matrix, die eine Ähnlichkeit zwischen den mehreren Gaußschen Prozessen anzeigt, und einer zweiten Matrix definiert wird, die eine Ähnlichkeit zwischen den mehreren induzierenden Orten anzeigt, wobei die erste Matrix und die zweite Matrix durch variationelle Parameter der variationellen Inferenzapproximation definiert werden;

6. Verfahren nach Anspruch 5, wobei das Optimieren des Satzes von Parametern ein Maximieren einer unteren Evidenzgrenze in Bezug auf den Trainingsdatensatz umfasst.

7. Verfahren nach Anspruch 5 oder 6, wobei das Optimieren des Satzes von Parametern ein Sampeln einer Ausgabe des probabilistischen Modells bei einer gegebenen Trainingseingabe und ein Berechnen einer Wahrscheinlichkeit eines Erhaltens der Trainingsausgabe, die der Trainingseingabe entspricht, aus der gesampelten Ausgabe unter einer Rauschverteilung umfasst.

8. Verfahren nach Anspruch 7, wobei das Sampeln der Ausgabe des probabilistischen Modells für die Trainingseingabe umfasst:

- Bestimmen einer Samplewahrscheinlichkeitsverteilung der Ausgaben der mehreren Gaußschen Prozesse für die Trainingseingabe, indem die Wahrscheinlichkeitsverteilung, die an die Ausgaben der mehreren Gaußschen Prozesse an den mehreren induzierenden Orten approximiert ist, aus einer gemeinsamen Wahrscheinlichkeitsverteilung ausgegrenzt wird;
- Sampeln von Ausgaben der mehreren Gaußschen Prozesse für die Trainingseingabe gemäß der Samplewahrscheinlichkeitsverteilung.

9. Verfahren nach einem der Ansprüche 6 bis 8, wobei das Maximieren der unteren Evidenzgrenze ein Durchführen eines stochastischen Gradientenabstiegs an einer Zielfunktion umfasst, welche die untere Evidenzgrenze umfasst.

10. Verfahren nach einem der Ansprüche 5 bis 9, wobei Vorläufer der mehreren Gaußschen Prozesse, die durch eine variationelle Inferenz approximiert werden, unabhängig voneinander sind.

11. Verfahren nach einem der Ansprüche 5 bis 10, wobei diagonale Elemente der ersten Matrix freie Parameter der variationellen Inferenzapproximation sind und wobei das System für die nicht-diagonalen Elemente der ersten Matrix annimmt, dass sie gleich Null sind.

12. Verfahren nach einem der Ansprüche 5 bis 11, wobei der Satz von Parametern des probabilistischen Modells einen oder mehrere Kernel-Hyperparameter umfasst, und wobei jeder Gaußsche Prozess der mehreren Gaußschen Prozesse einen Kernel aufweist, der durch den einen oder die mehreren Kernel-Hyperparameter definiert wird.

13. Verfahren nach einem der vorhergehenden Ansprüche 4 bis 12, wobei:

- in einem Fall, in dem das technische System der Roboter ist, das probabilistische Modell lernt, einen Emissionswert des Fahrzeugmotors basierend auf Geschwindigkeit und Belastung oder den entsprechenden ECU-Parametern vorherzusagen; oder
- in einem Fall, in dem das technische System der Roboter ist, das probabilistische Modell ein inverses dynamisches Modell ist, das lernt ein Drehmoment aus den Eingaben vorherzusagen, die eine oder mehrere einer Position, einer Geschwindigkeit und einer Beschleunigung des Roboters beinhalten.

14. Computerlesbares Medium (700), das Anweisungen umfasst, die, wenn sie durch einen Prozessor ausgeführt werden, den Prozessor veranlassen, das computerimplementierte Verfahren nach einem der Ansprüche 4 bis 13 durchzuführen.

**Revendications**

1. Système (200) de commande d'un système technique sur la base d'une sortie qui est obtenue en appliquant un modèle probabiliste du système technique à une entrée, le système technique étant un robot, un véhicule, un appareil ménager, un outil motorisé, une machine de fabrication, un assistant personnel, un système de contrôle d'accès ou un moteur de voiture, le modèle probabiliste comportant une ou plusieurs couches, une couche parmi la ou les couches comportant de multiples processus gaussiens, le système comportant :

- une interface (220) de données servant à accéder à un ensemble de paramètres (050) du modèle probabiliste, le modèle probabiliste ayant été appris pour prédire une ou plusieurs grandeurs physiques de sortie du système technique d'après au moins une ou plusieurs grandeurs physiques d'entrée obtenues à partir d'un ou de plusieurs capteurs, l'ensemble de paramètres comportant au moins :

    - un ensemble de multiples emplacements d'admission pour les multiples processus gaussiens ;
    - des paramètres d'une distribution de probabilité d'une approximation par inférence variationnelle de sorties des multiples processus gaussiens aux mul-tiples emplacements d'admission, la distribution de probabilité constituant une distribution de probabilité normale multivariée, une matrice de covariance de la distribution normale multivariée étant définie par un produit de Kronecker d'une première matrice indiquant une similarité entre les multiples processus gaussiens et d'une seconde matrice indiquant une similarité entre les emplacements d'admission, la première matrice et la seconde matrice étant définies par des paramètres variationnels de l'approximation par inférence variationnelle ;
    - une ou plusieurs interfaces servant à accéder à l'entrée, l'entrée étant obtenue à partir d'un ou de plusieurs capteurs ;
    - un sous-système (240) de processeur disposé pour déterminer un échantillon d'une sortie du modèle probabiliste sur l'entrée (060) d'après l'ensemble de paramètres (050) du modèle probabiliste ; et
    - une interface de commande configurée pour commander le système technique d'après la sortie du modèle probabiliste.

2. Système (200) selon la revendication 1, le processeur étant configuré pour déterminer de multiples échantillons de la sortie du modèle probabiliste sur l'entrée et déterminer une estimation d'incertitude à partir de ceux-ci.

3. Système selon l'une quelconque des revendications précédentes :

    - dans le cas où le système technique est le moteur de voiture, le modèle probabiliste étant appris pour prédire une valeur d'émissions du moteur de voiture sur la base d'une vitesse et d'une charge ou des paramètres d'ECU correspondants ; ou
    - dans le cas où le système technique est le robot, le modèle probabiliste étant un modèle de dynamique inverse appris pour prédire un couple à partir d'entrées comportant une ou plusieurs entrées parmi une position, une vitesse et une accélération du robot.

4. Procédé (600), mis en oeuvre par ordinateur, d'application d'un modèle probabiliste d'un système technique à une entrée obtenue à partir d'un ou de plusieurs capteurs, le système technique étant un robot, un véhicule, un appareil ménager, un outil motorisé, une machine de fabrication, un assistant personnel, un système de contrôle d'accès ou un moteur de voiture, le modèle probabiliste ayant été appris pour prédire une ou plusieurs grandeurs physiques de sortie du système technique d'après au moins une ou plusieurs grandeurs physiques d'entrée obtenues à partir d'un ou de plusieurs capteurs, et le modèle probabiliste comportant une ou plusieurs couches, une couche parmi la ou les couches comportant de multiples processus gaussiens, le procédé comportant les étapes consistant à :

- accéder (610) à l'entrée et à un ensemble de paramètres du modèle probabiliste, l'ensemble de paramètres comportant au moins :

- un ensemble de multiples emplacements d'admission pour les multiples processus gaussiens ;
- des paramètres d'une distribution de probabilité d'une approximation par inférence variationnelle de sorties des multiples processus gaussiens aux mul-tiples emplacements d'admission, la distribution de probabilité constituant une distribution de probabilité normale multivariée, une matrice de covariance de la distribution normale multivariée étant définie par un produit de Kronecker d'une première matrice indiquant une similarité entre les multiples processus gaussiens et d'une seconde matrice indiquant une similarité entre les emplacements d'admission, la première matrice et la seconde matrice étant définies par des paramètres variationnels de l'approximation par inférence variationnelle ;
- déterminer (620) un échantillon d'une sortie du modèle probabiliste sur l'entrée d'après l'ensemble de paramètres du modèle probabiliste ; et
- commander le système technique d'après la sortie du modèle probabiliste.

5. Procédé selon la revendication 4, le modèle probabiliste ayant été entraîné :

- en accédant (510) à un ensemble de données d'apprentissage comportant de mul-tiples entrées d'apprentissage et des sorties d'apprentissage correspondantes ;
- en déterminant l'ensemble de paramètres du modèle probabiliste par optimisation (520) de l'ensemble de paramètres par rapport à l'ensemble de données d'apprentissage, l'ensemble de paramètres comportant au moins :

- un ensemble de multiples emplacements d'admission pour les multiples processus gaussiens ;
- des paramètres d'une distribution de probabilité d'une approximation par inférence variationnelle de sorties des multiples processus gaussiens aux mul-tiples emplacements d'admission, la distribution de probabilité constituant une distribution de probabilité normale multivariée, une matrice de covariance de la distribution normale multivariée étant définie par un produit de Kronecker d'une première matrice indiquant une similarité entre les multiples processus gaussiens et d'une seconde matrice indiquant une similarité entre les multiples emplacements d'admission, la première matrice et la seconde matrice étant définies par des paramètres variationnels de l'approximation par inférence variationnelle.

6. Procédé selon la revendication 5, l'optimisation de l'ensemble de paramètres com-portant la maximisation d'une borne inférieure de preuve par rapport à l'ensemble de données d'apprentissage.

7. Procédé selon la revendication 5 ou 6, l'optimisation de l'ensemble de paramètres comportant l'échantillonnage d'une sortie du modèle probabiliste étant donné une entrée d'apprentissage et le calcul d'une probabilité d'obtenir la sortie d'apprentissage correspondant à l'entrée d'apprentissage à partir de la sortie échantillonnée sous une distribution de bruit.

8. Procédé selon la revendication 7, l'échantillonnage de la sortie du modèle probabiliste pour l'entrée d'apprentissage comportant :

- la détermination d'une distribution d'échantillons de probabilité de sorties des multiples processus gaussiens pour l'entrée d'apprentissage en éliminant d'une distribution de probabilité conjointe, par marginalisation, la distribution de probabilité qui approxime les sorties des multiples processus gaussiens aux multiples emplacements d'admission ;
- l'échantillonnage de sorties des multiples processus gaussiens pour l'entrée d'apprentissage selon la distribution d'échantillons de probabilité.

9. Procédé selon l'une quelconque des revendications 6 à 8, la maximisation de la borne inférieure de preuve com-portant la réalisation d'une descente de gradient stochastique sur une fonction objectif comportant la borne inférieure de preuve.

10. Procédé selon l'une quelconque des revendications 5 à 9, des a priori des multiples processus gaussiens qui sont approximés par inférence variationnelle étant indé-pendants les uns des autres.

**11.** Procédé selon l'une quelconque des revendications 5 à 10, les éléments diagonaux de la première matrice étant des paramètres libres de l'approximation par inférence variationnelle et les éléments non diagonaux de la première matrice étant supposés nuis par le système.

**12.** Procédé selon l'une quelconque des revendications 5 à 11, l'ensemble de para-mètres du modèle probabiliste comportant un ou plusieurs hyperpara-mètres de noyau, chaque processus gaussien parmi les multiples processus gaussiens possé-dant un noyau défini par l'hyperparamètre ou les hyperpa-ramètres de noyau.

**13.** Procédé selon l'une quelconque des revendications 4 à 12 qui précèdent :

- dans le cas où le système technique est le robot, le modèle probabiliste étant appris pour prédire une valeur d'émissions du moteur de voiture sur la base d'une vitesse et d'une charge ou des paramètres d'ECU correspondants ; ou
- dans le cas où le système technique est le robot, le modèle probabiliste étant un modèle de dynamique inverse appris pour prédire un couple à partir d'entrées comportant une ou plusieurs entrées parmi une position, une vitesse et une accélération du robot.

**14.** Support (700) lisible par ordinateur comportant des instructions qui, lorsqu'elles sont exécutées par un processeur, amènent le processeur à réaliser le procédé mis en oeuvre par ordinateur selon l'une quelconque des revendications 4 à 13.

Fig. 1

Fig. 2

**Fig. 3**

EP 3 716 160 B1

Fig. 4

500

510

520

**Fig. 5**

600

610

620

**Fig. 6**

710

700

**Fig. 7**

Fig. 8a

Fig. 8b

Fig. 8c

Fig. 8d

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YOUNG-JIN PARK et al.** Deep Gaussian Process-Based Bayesian Inference for Contaminant Source Localization. *IEEE ACCESS,* 01 January 2018, vol. 6, 49432-49449